# FASCICULE DE BREVET EUROPEEN

(11) **EP 0 677 267 B1**
(45) Date de publication et mention de la délivrance du brevet: **27.11.1996**
(21) Numéro de dépôt: 94440026.6
(22) Date de dépôt: 14.04.1994
(51) Int. Cl.: A47J 37/07, A47J 37/06

(54) **Appareil pour rotir des animaux ou des pièces de viande de grandes dimensions**
Gerät zum Braten von Tieren oder grossen Fleischstücken
Device for roasting animals or large meat parts

(43) Date de publication de la demande: 18.10.1995
(73) Titulaire: GUILLET S.A., F-67127 Molsheim Cedex (FR)
(72) Inventeur: Guillet, Gilles, F-67380 Lingolsheim (FR)
(74) Mandataire: Littolff, Denis

(56) Documents cités:
- WO-A-93/25133
- AU-D- 2 592 984
- AU-D- 3 722 884
- DE-A- 1 454 050
- DE-A- 1 803 466
- DE-B- 2 542 853
- DE-C- 356 311
- US-A- 3 834 370

## Description

La présente invention concerne les appareils destinés à griller ou rôtir divers animaux ou pièces de viande en les exposant, sur une broche ou un gril, à un foyer de charbon de bois, le plus souvent en plein air, et généralement désignés sous le nom de "barbecue". Elle vise plus spécialement un nouvel appareil de ce type comportant des aménagements appropriés à leur application à des animaux ou pièces de viande de grandes dimensions, notamment des agneaux ou des moutons entiers, pour réaliser un "méchoui".

De tels appareils sont connus dans leur principe, par exemple, pour le rôtissage des volailles. Ainsi, le document DE-A-1 803 466, qui remonte à 1968, décrit une réalisation dans laquelle l'appareil se compose d'une part d'un foyer vertical à charbon de bois, monté sur un piétement stabilisateur, et d'autre part d'un équipage mobile horizontalement de manière à pouvoir être à volonté écarté ou rapproché dudit foyer, cet équipage comprenant un lèchefrite supportant une broche entraînée en rotation par un moteur, et étant monté coulissant sur des tiges horizontales traversant des logements pratiqués à diverses hauteurs dans le foyer de manière à rendre ajustable également la hauteur de la broche et du lèchefrite. Un tel appareil convient parfaitement au rôtissage de volailles de tailles diverses, et il est conçu de manière à pouvoir être aisément démonté et transporté, par exemple, en pique-nique.

Toutefois, une telle conception légère ne convient pas pour l'application à des animaux entiers tels que des agneaux ou des moutons, dont le poids peut dépasser 50 Kg. Il faut alors prévoir un appareil de conception beaucoup plus robuste dans toutes ses fonctions, à savoir d'une architecture plus stable, et équipé de moyens mécaniques et électriques permettant aussi commodément que possible l'ajustement de la distance de la broche au foyer et l'entraînement en rotation de la broche et de sa charge sans risquer de "griller" le moteur.

Le document WO-A-93/25133 présente un dispositif permettant le rôtissage de quartiers de viandes plus lourds, ou d'animaux entiers, mais dont la conception mécanique, ne permet pas d'adjuster la distance de la broche au foyer dans des conditions satisfaisantes. Par ailleurs le moteur entrainant la broche est directement relié à cette dernière.

L'objet de l'invention est de realiser un appareil permettant d'assurer des conditions de confort et de sécurité (éviter que l'utilisateur ne touche un organe chaud ou couvert de graisse brûlante) ainsi que sa pérennité.

Une simple glissière constituée de profilés emboîtés n'assure en outre aucune précision et fonctionne difficilement si le poids de l'animal est important.

C'est pourquoi, selon la conception de base de l'invention, l'équipage mobile horizontalement, également porté à ses extrémités latérales par deux poutres parallèles coulissantes situées de part et d'autre dudit foyer, repose sur des galets de guidage pivotants, au moins la portion postérieure de chacune de ces poutres constituant une crémaillère horizontale coopérant avec un pignon d'entraînement monté à chaque extrémité d'un arbre de commande situé derrière ledit foyer et pouvant être actionné par un volant, une manivelle ou analogue pour déterminer l'avance ou le recul dudit équipage.

Un tel montage, dans lequel les éléments fixes sont répartis à l'extérieur du foyer, assure à la fois un guidage efficace des poutres porte-équipage, qui sont maintenues chacune en permanence entre trois points, à savoir les deux galets de guidage situés au-dessous et le pignon de commande situé au-dessus, et une manoeuvre commode de l'avance et du recul de l'équipage mobile au moyen d'une manivelle située derrière le foyer et à l'extérieur de l'ensemble mobile. Ceci représente un avantage déterminant par rapport à l'appareil antérieur typique décrit au document DE-A-1 803 466, dans lequel, pour déplacer l'équipage, il fallait le prendre par l'avant, c'est à dire sous le rayonnement du foyer, et le faire coulisser sur des tiges par traction ou poussée, sans aucune aide mécanique.

Selon une réalisation particulièrement commode de ce montage, lesdits galets de guidage sont répartis pivotants par couple sur des poutres fixes parallèles adaptées aux deux faces latérales extérieures du foyer, le lèchefrite étant suspendu aux poutres coulissantes mobiles par des pattes situées dans l'espace libre entre lesdites poutres fixes, à une certaine distance du bas du foyer tandis que ladite broche est montée au-dessus desdites poutres coulissantes pratiquement à mi-hauteur du foyer, pour disposer d'un espace suffisant pour la rotation d'un animal sur la broche face au foyer et la collecte des graisses hors de la chaleur du foyer.

Par ailleurs, il faut également prendre en considération le fait que l'entraînement en rotation d'une broche portant un animal de 50 Kg au moyen d'un moteur électrique pose un problème différent de celui de la rotation d'un poulet dans un gril traditionnel. En effet, si le moteur et la broche étaient liés de manière rigide et constante, ledit moteur serait soumis à une telle succession de chocs électriques qu'il "grillerait" au bout de quelques démarrages.

Pour éviter cet inconvénient, il est prévu, selon l'invention, de monter le moteur sur un chariot coulissant sur un support parallèle à la broche, et de l'accoupler à la broche par un système relativement souple, comprenant une douille creuse et une broche ayant des sections voisines, prévues respectivement à une extrémité de la broche et à l'extrémité de l'arbre de sortie du moteur, la rotation du moteur pouvant être maintenue continue, et ses accouplements / désaccouplements se faisant au moyen d'un système à vis manoeuvré par un bouton extérieur, et commandant le rapprochement / éloignement du moteur et de la broche.

Enfin, toujours compte tenu du poids de l'équipage, avec le besoin d'un espace libre au-dessous, la stabilité de l'appareil est assurée selon l'invention grâce au fait que ledit piétement se compose de deux pieds verticaux montés sous les coins postérieurs du foyer et de deux pieds obliques, montés sous les coins antérieurs du foyer et s'étendant jusque sous l'emplacement du lèchefrite pour compenser le porte-à-faux de celui-ci.

Il ressort de ces diverses dispositions et aménagements que l'invention vise un appareil original, répondant aux contraintes liées à son utilisation, telles qu'elle se distinguent des applications habituelles des barbecues domestiques.

On va maintenant décrire un mode de réalisation préférentiel de l'invention, en se référant au dessin annexé, sur lequel :
- La figure 1 est une vue perspective de trois quart avant d'un appareil selon l'invention,
- La figure 2 est une vue perspective de trois quart arrière du même appareil,
- La figure 3 est une coupe verticale d'un côté de l'équipage mobile, montrant le système de guidage et le mode de suspension du lèchefrite,
- La figure 4 est une coupe verticale de l'extrémité de l'équipage mobile portant le moteur d'entraînement de la broche.

Sur ce dessin, l'appareil à rôtir selon l'invention se compose, de façon connue, d'un foyer vertical 1 et d'un équipage mobile comprenant une broche 2 entraînée par un moteur 3, solidaire d'un lèchefrite 4.

Selon l'invention, l'équipage mobile est porté, par l'intermédiaire de pattes 5, par un couple de poutres horizontales 6, coulissant en restant parallèles entre elles de chaque côté du foyer 1 en étant guidées par des galets 7 montés pivotants sur des poutres fixes 8 soudées aux parois latérales du foyer 1.

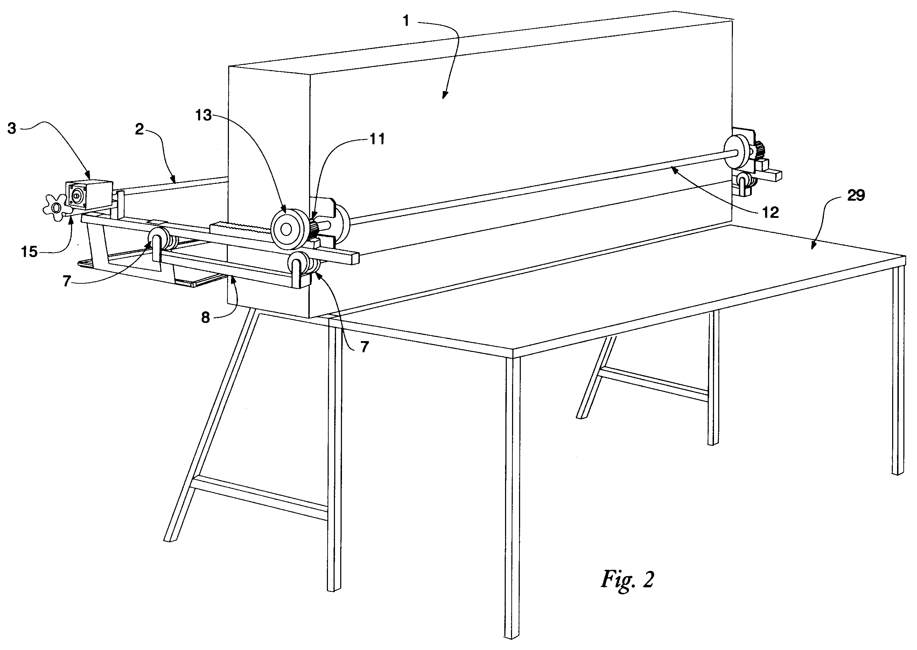

La partie supérieure postérieure 9 de chaque poutre 6 porte une crémaillère 10 sur laquelle engrène un pignon 11 monté à l'extrémité d'un arbre de commande 12 s'étendant sur toute la largeur du dos du foyer 1 (figure 2) et portant, sur un côté au moins, un volant ou une manivelle de manoeuvre 13.

Chaque poutre coulissante 6 est donc à la fois maintenue horizontale entre les trois points constitués par les galets 7 et 11, guidée dans son déplacement horizontal vers l'avant et l'arrière, et entraînée par la manoeuvre du volant 13 grâce au couple pignon 9 / crémaillère 10, sans qu'à aucun moment l'utilisateur ne se trouve exposé à la chaleur du foyer 1.

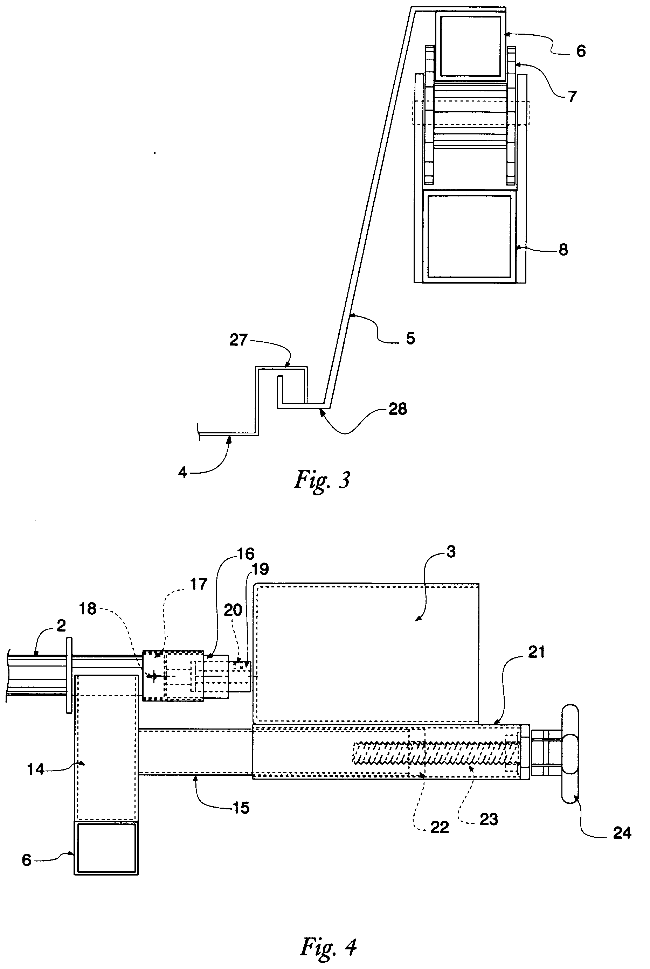

A sa partie avant, chaque poutre 6 supporte deux pattes 5 légèrement inclinée vers l'intérieur (figure 3) et auxquelles est suspendu le lèchefrite 4 à une hauteur suffisante pour recueillir les grasses, et les conserver hors du rayonnement du foyer 1.

Par ailleurs, également à leur partie avant, les poutres 6 supportent, par des fourches 14, les extrémité de la broche 2, et sur l'une de ces fourches (figure 4), un tube porte-moteur 15.

La broche 2 se termine, du même côté (figure 4) par une douille 16, fixée à la broche 2 par une bague 17 immobilisée par une vis 18. L'arbre de sortie du moteur qui fait face à cette douille 16 se termine par un écrou 19, également fixé par une vis 20 et ayant sensiblement les mêmes dimensions que la douille.

Le moteur 3 lui-même est monté sur un tube 21 coulissant sur le tube 15 et relié à un écrou 22 mobile axialement et traversé par une vis 23, commandée par un bouton 24, dépassant à l'extérieur du tube 21.

La manoeuvre en rotation du bouton 24 provoque le déplacement, dans un sens ou dans l'autre, de l'ensemble de l'écrou 22 et du moteur 3, et par suite la coopération ou la séparation respectivement de la douille 16 et de l'écrou 19, c'est à dire la mise en rotation ou l'arrêt de la broche 2. Ce montage simple évite tout à-coup sur le moteur 3, qui est donc préservé.

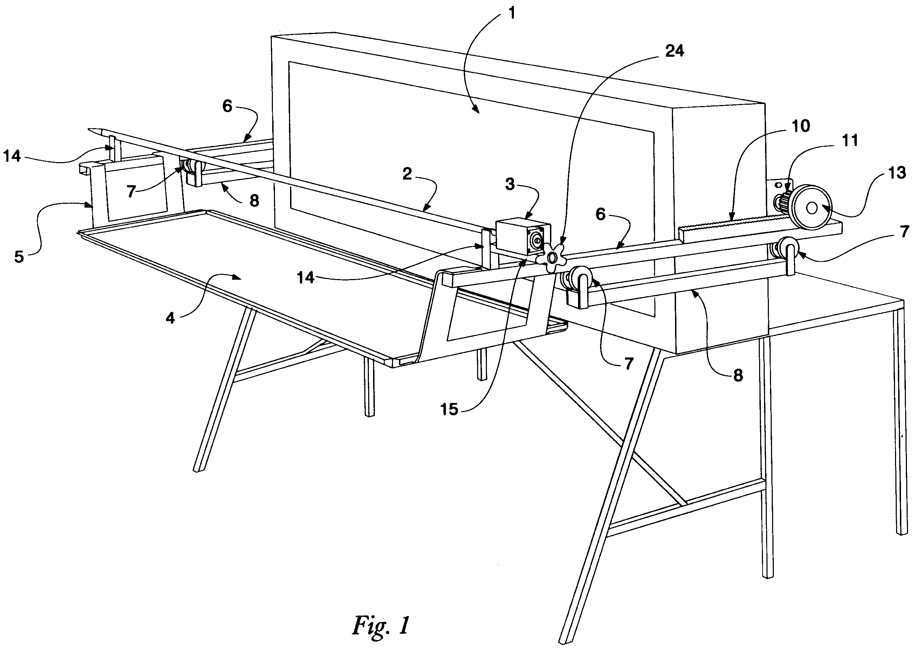

Enfin, comme il apparaît clairement sur les figures 1 et 2, la stabilité de l'appareil est assurée par la forme de son piétement : les pieds postérieurs 25 verticaux, assurent l'assise du foyer 1, tandis que les pieds antérieurs 26 sont nettement inclinés vers l'avant, de manière à être situés sensiblement à l'aplomb du lèchefrite 4 quand l'équipage est tiré au maximum vers l'avant, ce qui compense l'important porte-à-faux de ce dernier et évite le basculement de l'appareil.

Enfin, sur le plan pratique, le lèchefrite 4 est monté par accrochage de ses rebords 27 sur des glissières correspondantes 28 des pattes 5, ce qui permet de le prélever aisément, tandis qu'à l'arrière de l'appareil est prévu un plan de travail 29 reposant sur des pieds 30 contribuant également à la stabilité de l'ensemble.

## Revendications

1. Appareil destiné à faire rôtir un animal ou une pièce de viande de relativement grandes dimensions, du type se composant d'une part d'un foyer vertical (1) à charbon de bois, monté sur un piétement stabilisateur (25, 26), et d'autre part d'un équipage mobile (2, 3, 4) horizontalement de manière à pouvoir être à volonté écarté ou rapproché dudit foyer (1), cet équipage comprenant un lèchefrite (4) supportant une broche (2) entraînée en rotation par un moteur (3), et étant porté à ses extrémités par deux poutres (6) parallèles coulissantes situées de part et d'autre dudit foyer,
caractérisé en ce que l'équipage mobile (2, 3, 4) repose sur des galets (7) de guidage pivotants, au moins la portion postérieure de chacune de ces poutres (6) constituant une crémaillère horizontale (10) coopérant avec un pignon (11) d'entraînement monté à chaque extrémité d'un arbre de commande (12) situé derrière ledit foyer (1) et pouvant être actionné par un volant (13), une manivelle ou analogue pour déterminer l'avance ou le recul dudit équipage (2, 3, 4).

2. Appareil selon la revendication 1, caractérisé en ce que le lèchefrite (4) est suspendu auxdites poutres (6) coulissantes à une certaine distance du bas du foyer (1) tandis que ladite broche (2) est montée au-dessus desdites poutres coulissantes (6) pratiquement à mi-hauteur du foyer (1), pour disposer d'un espace suffisant pour la rotation d'un animal sur la broche (2) face au foyer (1) et la collecte des grasses hors de la chaleur du foyer (1).

3. Appareil selon les revendications 1 et 2, caractérisé en ce que lesdits galets (7) sont répartis pivotants par couple sur des poutres fixes (8) parallèles adaptées aux deux faces latérales extérieures du foyer (1), le lèchefrite (4) étant suspendu aux poutres coulissantes (6) mobiles par des pattes (5) situées dans l'espace libre entre lesdites poutres (8) fixes.

4. Appareil selon l'une des revendications 1 à 3, caractérisé en ce que la broche (2) est connectée au moteur (3) par un accouplement souple et débrayable évitant les chocs au démarrage.

5. Appareil selon la revendication 4, caractérisé en ce que ledit accouplement consiste en un couple douille femelle (16) / écrou mâle (19) portés respectivement par une extrémité de la broche (2) et par l'arbre de sortie du moteur (3), ledit moteur (3) étant monté coulissant grâce à un système à vis (23) / écrou (22) de manière à permettre la coopération / séperation de son arbre de sortie avec ladite douille (16), c'est à dire l'entraînement / arrêt de la broche (2) sans à-coup sur le moteur.

6. Appareil selon l'une des revendications 1 à 5, caractérisé en ce que ledit piétement se compose de deux pieds verticaux montés sous les coins postérieurs du foyer et de deux pieds obliques, montés sous les coins antérieurs du foyer (1) et s'étendant jusque sous l'emplacement du lèchefrite (4) pour compenser le porte-à-faux de celui-ci.

## Claims

1. Apparatus for roasting an animal or a piece of meat of relatively large dimensions, of the type consisting on the one hand of a vertical wood charcoal fireplace (1), mounted on a stabilizing support (25, 26) and on the other hand of equipment (2, 3, 4) which is movable horizontally so that it can be moved at will nearer to or further away from the said fireplace (1), this equipment comprising a grease pan (4) supporting a spit (2) rotated by a motor (3) and being carried at its ends by two sliding parallel beams (6) situated either side of the said fireplace,
characterized in that the movable equipment (2, 3, 4) rests on pivoting guide rollers (7), at least the rear portion of each of these beams (6) consisting of a horizontal rack (10) cooperating with a drive pinion (11) mounted at each end of a control shaft (12) situated behind the said fireplace (1) and which can be operated by a wheel (13), a crank or similar device for determining the forward or backward movement of the said equipment (2,3,4).

2. Apparatus according to claim 1, characterized in that the grease pan (4) is suspended from the said sliding beams (6) at a certain distance from the base of the fireplace (1) while the said spit (2) is mounted above the said sliding beams (6) practically at the mid-height of the fireplace (1) so as to make sufficient space available for the rotation of an animal on the spit (2) facing the fireplace (1) and for collecting grease away from the heat of the fireplace (1).

3. Apparatus according to claims 1 and 2 characterized in that the said rollers (7) are distributed to pivot in pairs on fixed parallel beams (8) adapted to the external lateral faces of the fireplace (1), the grease pan (4) being suspended from the movable sliding beams (6) by brackets (5) situated in the free space between the said fixed beams (8).

4. Apparatus according to one of claims 1 to 3, characterized in that the spit (2) is connected to the motor (3) by a flexible coupling which can be disengaged to avoid starting shocks.

5. Apparatus according to claim 4, characterized in that the said coupling consists of a female coupling socket (16)/male nut (19) carried respectively by one end of the spit (2) and by the output shaft of the motor (3), the said motor (3) being mounted so as to slide by means of a screw (23)/nut (22) system so as to enable cooperation/separation of the output shaft to take place with the said socket (16), that is to enable the spit (2) to be engaged or stopped without jolting the motor.

6. Apparatus according to one of claims 1 to 5, characterized in that the said support consists of two vertical legs mounted under the rear corners of the fireplace and two oblique legs, mounted under the front corners of the fireplace (1) and extending to a point under the location of the grease pan (4) to compensate for the overhang of the latter.

## Patentansprüche

1. Gerät, das dazu vorgesehen ist, ein Tier oder ein verhältnismäßig großes Fleischstück zu braten, des Typs, der einerseits aus einer vertikalen Holzkohlen-Feuerstelle (1), die an einem Stabilisator-Fußgestell (25, 26) angebracht ist, und andererseits aus einer Einrichtung (2, 3, 4) aufgebaut ist, die in horizontaler Richtung in der Weise beweglich ist, daß sie nach Belieben von der Feuerstelle (1) entfernt oder an diese angenähert werden kann, wobei diese Einrichtung eine Tropfschale (4) enthält, die einen Bratspieß (2) unterstutzt, der von einem Motor (3) in Drehrichtung angetrieben wird, und an seinen Enden von zwei parallel gleitenden Trägern (6) getragen wird, die sich beiderseits der Feuerstelle befinden,
dadurch gekennzeichnet, daß die bewegliche Einrichtung (2, 3, 4) auf drehbar gelagerten Führungsrollen (7) aufruht, wobei wenigstens der hintere Abschnitt jedes dieser Träger (6) eine horizontale Zahnstange (10) bildet, die mit einem Antriebsritzel (11) zusammenwirkt, daß an jedem Ende einer hinter der Feuerstelle (1) befindlichen Steuerwelle (12) angebracht ist und durch ein Handrad, eine Kurbel oder dergleichen betätigt werden kann, um das Ausfahren oder Einfahren der Einrichtung (2, 3, 4) zu bestimmen.

2. Gerät nach Anspruch 1, dadurch gekennzeichnet, daß die Tropfschale (4) an den gleitenden Trägern (6) in einem bestimmten Abstand von der Unterseite der Feuerstelle (1) aufgehängt ist, während der Bratspieß (2) oberhalb der gleitenden Träger (6) praktisch auf halber Höhe der Feuerstelle (1) angebracht ist, um einen ausreichenden Zwischenraum für die Drehung eines Tiers auf dem Bratspieß (2) gegenüber der Feuerstelle (1) und für das Sammeln von Fetten außerhalb der Hitze der Feuerstelle (1) zu schaffen.

3. Gerät nach den Ansprüchen 1 und 2, dadurch gekennzeichnet, daß die Rollen (7) paarweise auf parallelen und an die zwei äußeren Seitenflächen der Feuerstelle (1) angepaßten, festen Trägern (8) drehbar gelagert verteilt sind, wobei die Tropfschale (4) an beweglichen, gleitenden Trägern (6) durch Haken (5) aufgehängt sind, die sich im freien Zwischenraum zwischen den festen Trägern (8) befinden.

4. Gerät nach einem der Ansprüche 1 bis 3, dadurch gekennzeichnet, daß der Bratspieß (2) mit dem Motor (3) durch eine elastische und ausschaltbare Kupplung verbunden sind, die Anfahrstöße vermeidet.

5. Gerät nach Anspruch 4, dadurch gekennzeichnet, daß die Kupplung aus einer Buchse (16)/Steckmutter (19) besteht, die von einem Ende des Bratspießes (2) bzw. von der Abtriebswelle des Motors (3) getragen werden, wobei der Motor (3) kraft eines Schrauben (23)/Muttern (22)-Systems in der Weise gleitend angebracht ist, daß die Zusammenwirkung/Trennung seiner Abtriebswelle mit der bzw. von der Buchse (16), d. h. der Antrieb/das Anhalten des Bratspießes (2) ohne Stoß auf den Motor möglich ist.

6. Gerät nach einem der Ansprüche 1 bis 5, dadurch gekennzeichnet, daß das Fußgestell aus zwei vertikalen Füßen, die unter den hinteren Ecken der Feuerstelle angebracht sind, sowie aus zwei schrägen Füßen gebildet ist, die unter den vorderen Ecken der Feuerstelle (1) angebracht sind und sich bis zum Ort der Tropfschale (4) erstrecken, um deren Überhang zu kompensieren.
